# EUROPÄISCHE PATENTSCHRIFT

(11) **EP 1 444 293 B1**
(45) Veröffentlichungstag und Bekanntmachung des Hinweises auf die Patenterteilung: **15.01.2014**
(21) Anmeldenummer: 02754966.6
(22) Anmeldetag: 01.08.2002
(51) Int. Cl.: C08J 9/04, B29C 35/04, B29C 44/34, C08L 33/24

(54) **VERFAHREN ZUR HERSTELLUNG VON POLYMETHACRYLIMIDSCHÄUMEN**
METHOD FOR PRODUCING POLYMETHACRYLIMIDE FOAMS
PROCEDE DE PRODUCTION DE MOUSSES POLYMETHACRYLIMIDES

(30) Priorität: 29.08.2001 DE 10141757
(43) Veröffentlichungstag der Anmeldung: 11.08.2004
(73) Patentinhaber: Evonik Röhm GmbH, 64293 Darmstadt (DE)
(72) Erfinder: STEIN, Peter, 64367 Traisa (DE); SEIBERT, Hermann, 67663 Kaiserslautern (DE); MAIER, Leonard, 63110 Rodgau (DE); ZIMMERMANN, Rainer, 64342 Seeheim-Jugenheim (DE); HEBERER, Wilfried, 64385 Reichelsheim (DE); GEYER, Werner, 64367 Mühltal (DE)
(86) Internationale Anmeldenummer: PCT/EP2002/008569
(87) Internationale Veröffentlichungsnummer: WO 2003/020804

(56) Entgegenhaltungen:
- EP-A2- 0 874 019
- WO-A-00/63280
- DE-A- 3 630 930
- PATENT ABSTRACTS OF JAPAN vol. 016, no. 212 (M-1250), 19. Mai 1992 (1992-05-19) & JP 04 037529 A (SEKISUI CHEM CO LTD), 7. Februar 1992 (1992-02-07)

## Beschreibung

### GEBIET DER ERFINDUNG

Die Erfindung betrifft ein verbessertes Verfahren zur Herstellung von Polymethacrylimid-Schaumstoffen, die aus nach dem Gußverfahren hergestellten Polymerisatplatten geschäumt werden. Das zweistufige Verfahren besteht aus einem Vorwärmeschritt und einem oder mehreren Schäumschritten.

### STAND DER TECHNIK

Polymethacrylimid-Schaumstoffe sind seit langer Zeit bekannt und finden wegen ihren ausgezeichneten mechanischen Eigenschaften und ihres geringen Gewichts eine breite Anwendung, insbesondere bei der Herstellung von Schichtwerkstoffen, Laminaten, Composits oder Schaumstoffverbundkörpern. Hierbei werden häufig Prepregs mit Kernwerkstoffen aus Polymethacrylimid verbunden.

Beispielsweise werden sie im Flugzeugbau, im Schiffsbau aber auch im Automobilbau eingesetzt. Für viele dieser zahlreichen Anwendungen müssen sie technischen Anforderungen genügen, die in gesetzlichen Vorschriften und einer Reihe anderer Regelwerke niedergelegt sind.

Die vorliegende Erfindung erstreckt sich auf das Gebiet der nach dem Gußverfahren hergestellten Polymerblöcke und daraus hergestellten Polymethacrylimid-Schaumstoffe. Hierbei werden die Monomere Methacrylsäure und Methacrylnitril zwischen zwei planparallelen Platten - meist Glasplatten - verfüllt. Nach der Polymerisation werden die erhaltenen Polymerplatten in einem weiteren, getrennten Verfahrensschritt aufgeschäumt.

Das in der Herstellungstechnik relevante Verfahren beruht auf der Schäumung in einem Heißluftofen, was im Folgenden als Heißluftverfahren bezeichnet werden soll. Die Polymerisatplatten werden hängend in einen Umluftofen hineingefahren, durch diesen mit einem selbstlaufenden Zugsystem hindurchtransportiert und am Ende als Schaumplatten herausgefahren. Die Strecke, die die Platten im Ofen zurücklegen, wird im Folgenden als L bezeichnet. Die Schäumzeit ist also durch die Länge L des Ofens und die im gesamten Ofen konstante Fahrgeschwindigkeit V des Transportsystems definiert. Der Durchsatz des Ofens hängt neben seiner Länge L und der Fahrgeschwindigkeit V des Transportsystems außerdem noch von dem zeitlichen Abstand t und damit auch geometrischen Abstand a der Platten ab, mit dem diese in den Ofen hineingefahren werden. Da die Platten sich während des Schäumprozesses stark verwerfen, muß der Abstand a größer sein als b/π, damit die Platten sich während der Schäumung nicht berühren und dadurch beschädigt werden können. Als b wird die Länge der Seite bezeichnet, an der die Platte aufgehängt ist und die die Platte hat, wenn sie geschäumt ist. Der Inhalt dieser Veröffentlichung beschränkt sich auf den Verfahrensschritt der Schäumung.

DE 3 630 930 beschreibt eine weiteres Verfahren zur Schäumung der oben genannten Copolymerplatten aus Methacrylsäure und Methacrylnitril. Hierbei werden die Platten mit Hilfe eines Mikrowellenfeldes zum Schäumen gebracht weshalb dieses im Folgenden als Mikrowellenverfahren bezeichnet wird. Hierbei muß beachtet werden, daß die zu schäumende Platte oder zumindest ihre Oberfläche vorher bis oder über den Erweichungspunkt des Materials erhitzt werden muß. Da unter diesen Bedingungen naturgemäß auch die Schäumung des durch die äußerliche Erwärmung erweichten Materials einsetzt, ist der Schäumprozeß allein durch den Einfluß eines Mikrowellenfeldes nicht steuerbar, sondern muß von einem begleitenden Heizen von außen mitgesteuert werden. Es wird also zu dem normalen einstufigen Heißluftverfahren ein Mikrowellenfeld hinzugeschaltet um die Schäumung zu beschleunigen. Das Mikrowellenverfahren hat sich jedoch als zu kompliziert und daher nicht praxisrelevant erwiesen und findet bis heute keine Anwendung.

WO90/2621 beschreibt einen Schaum aus Methacrylsäure und Methacrylnitril, wobei Acrylamid als Comonomer verhindert, das bei der Polymerisation vorzeitig Niederschläge entstehen. Der gebildete Schaum ist sehr gleichmäßig, das Produkt weist keine internen Spannungen auf.

DE 197 17 483 beschreibt ein Verfahren zur Herstellung von Polymethacrylimid-Schaumstoffen, die mit 1-5 Gew.-%, bezogen auf die Monomermischung, MgO versetzt sind. Man erhält Schäume mit deutlich verbesserten thermomechanischen Eigenschaften.

DE 196 06 530 beschreibt den Zusatz eines Flammschutzes mittels Polymethacrylimid-Schaumstoffen.

### AUFGABE

Um ROHACELL für bestehende Anwendungsfelder attraktiver zu machen, ist es notwenig, seine Materialeigenschaften zu optimieren. Freiwerdende Reaktionswärme während der Schäumung führt zu einem Temperaturgradienten in der schäumenden Platte und daher auch zu einer vom Ort abhängigen Dichte in der Platte. Dies hat zur Folge, daß die mechanischen Kenndaten einer Schaumplatte ebenfalls vom Ort der Probenentnahme abhängen, da die Dichte bekanntlichermaßen starken Einfluß auf mechanische Eigenschaften wie beispielsweise Druckfestigkeit oder auch Kriechverhalten hat. Die freiwerdende Reaktionswärme kann bei der Herstellung niedriger Dichten zu Rißbildung und damit zur Zerstörung des Materials führen. Es wurde nun gefunden, dass sich die oben genannten Nachteile durch das gefundene Verfahren vermeiden lassen. Dazu soll durch eine damit verbundene Erhöhung des Durchsatzes eine effizientere Herstellung gewährleistet werden.

### LÖSUNG

Überraschenderweise ist die Lösung der oben beschriebenen Aufgabe durch eine Teilung des Heißluftverfahrens in zwei getrennte Heißluftprozesse möglich. Anstelle von zwei Heißluftprozessen können auch drei oder mehr Prozesse kombiniert werden. Im ersten Heißluftprozeß wird die zu schäumende Platte in einem Heißluftofen unterhalb der eigentlichen Schäumtemperatur des Materials vorgewärmt. Die lineare Regression des Temperaturanstiegs in Abhängigkeit von der Zeit ergibt eine mittlere lineare Heizrate von 0,001 -10 K/min, bevorzugt 0,01 - 5 K/min und besonders bevorzugt 0,1 - 1 K/min.

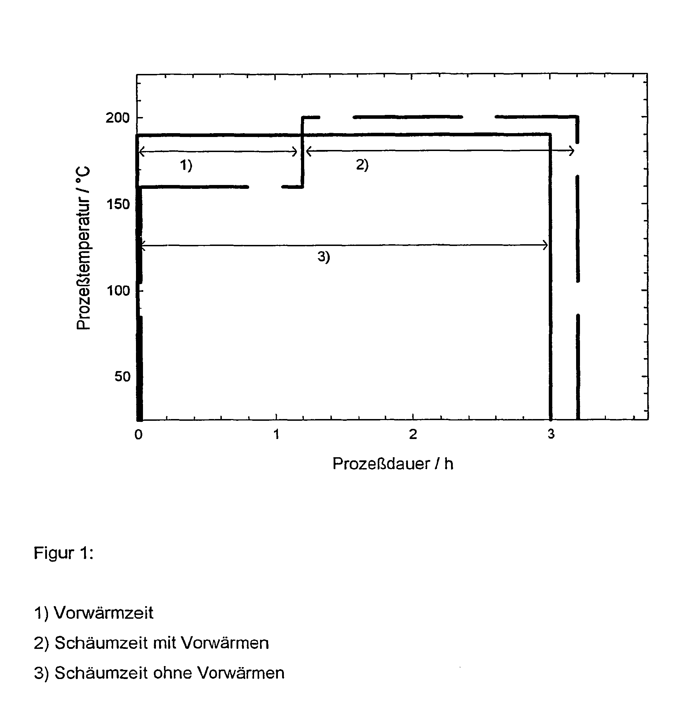

Die lineare Regression des Temperaturanstiegs wird auch als Temperaturrampe bezeichnet. Die heiße Platte wird aus dem Vorwärmofen in den eigentlichen Schäumheißluftofen hineingefahren. Der Schäumheißluftofen hat dabei die zur Schäumung notwendige Temperatur, die über der Vorwärmtemperatur liegt. Der Schäumheißluftofen kann auch aus einem zweiten Ofenteil des Vorwärmofens bestehen. Das Temperaturprofil, welches die Platte bei der Schäumung erfährt, ist durch die graue Linie in Figur 1 wiedergegeben. Die hohe Viskosität in dem niedrigeren Temperaturbereich der Vorwärmung erzwingt dabei eine übersättigte Lösung des Treibgases in dem Polymerisat. Die normalerweise während der Schäumung störende freiwerdende Reaktionswärme verteilt sich beim Vorwärmen gleichmäßig in der Polymerisatplatte. Erst beim Erwärmen des Materials auf die Schäumtemperatur tritt Phasentrennung von Polymermatrix und Treibmittel ein und führt zur Expansion der Polymerisatplatte.

Das Vorwärmen kann hierbei in Form einer Temperaturrampe oder einer konstanten Vorwärmtemperatur erfolgen. Figur 1 zeigt beispielhaft für den Fall einer konstanten Vorwärmtemperatur den Unterschied des bisherigen Verfahrens (schwarze Linie, einstufiges Heißluftverfahren) zu dem neuen Verfahren (graue Linie, zweistufiges Heißluftverfahren).

### Vorteile des erfindungsgemäßen Verfahrens:

Bei bestimmten Formulierungen weisen PMI Schäume ein mangelhaftes Kriechverhalten auf, wenn sie in einem einstufigen Verfahrenschritt geschäumt werden. Dies macht eine Verarbeitung solcher Schäume als Kernwerkstoff nur bedingt möglich. Mit Hilfe des zweistufigen Heißluftverfahrens kann die Stauchung nach DIN 53425 (ASTMD621) bis auf 1/10 reduziert werden.

Weiterhin kann bei bestimmten Formulierungen bei Anwendung des einstufigen Heißluftverfahrens zur Herstellung niedriger Dichten Rißbildung in den Schaumblöcken auftreten, was zu Ausschußware führt. Als Ausschußware sind hierbei Schaumblöcke zu sehen, die infolge nicht perfekter Schäumung Risse aufweisen und daher nicht für Anwendungen nutzbar sind. Risse dürfen nicht auftreten. So heißt z.B. 40 % Ausschuß, daß von 100 hergestellten Schaumblöcken 40 infolge von nicht perfekter Schäumung und/oder Rißbildung aussortiert und entsorgt werden müssen. Mit Hilfe des zweistufigen Heißluftverfahrens kann der Ausschuß mehr als halbiert werden.

Weil die eigentliche Schäumzeit durch ein vorgeschaltetes Vorwärmen reduziert werden kann, kann die Fahrgeschwindigkeit V des Transportsystems im Ofen bei einem zweistufigen Heißluftverfahren erhöht werden, was eine steigernde Auswirkung auf den Durchsatz hat. Figur 1 verdeutlicht beispielhaft diese Verkürzung der Schäumzeit durch das Vorwärmen der Polymerisate, ohne diesen Effekt auf die dort dargestellten Parameter einzuschränken: die Schäumzeit wird in diesem Beispiel auf 2/3 der ursprünglichen Schäumzeit verkürzt.

Wird die gleichmäßig vorgewärmte Polymerisatplatte auf die Schäumtemperatur weiter erwärmt, wird sowohl kein Temperaturgradient in der Platte durch eine exotherme Reaktion hervorgerufen als wird auch der Temperaturgradient durch den Temperatursprung auf die Schäumtemperatur selbst kleiner. Je größer dieser Temperatursprung ist, den die Polymerisatplatte mit dem Eintritt in den Schäumprozeß erfährt, um so größer ist der dadurch verursachte Temperaturgradient, der in der Platte erzeugt wird.

Es liegt auf der Hand, daß erstens aufgrund der thermischen Ausdehnung und zweitens aufgrund des durch den Temperaturgradienten verursacht vom Ort abhängigen, zeitverschobenen Beginnen des Schäumens Spannungsdifferenzen und Treibmitteldruckunterschiede in dem Material auftreten. In dem in Figur 1 dargestellten Beispiel beträgt der Temperatursprung, den die Polymerisatplatte mit Eintritt in den Schäumprozeß erfährt, für den Fall des einstufigen Heißluftverfahrens 175 K (schwarze Linie), für den Fall des zweitstufigen Heißluftverfahrens nur 40 K (graue Linie).

Durch eine geeignete (Temperaturrampe) läßt sich ein Temperatursprung auch ganz vermeiden. Dies hat letztendlich eine deutliche Folge auf die Homogenität der Schaumplatte: die eingangs beschriebene Verwerfung der Platten kann unterdrückt werden, so dass die Bedingung a > b/π nicht mehr eingehalten werden muß. Dies verkürzt die eingangs eingeführte Taktzeit t und hat damit durch die Erhöhung des Durchsatzes neben der erhöhten Wertschöpfung bei gleicher Ofenkonstruktion auch einen ökologischen Nutzen.

### BEISPIELE

### Vergleichsbeispiel 1:

Zu einem Gemisch aus 5700 g Methacrylsäure, 4380 g Methacrylnitril und 31 g Allylmethacrylat wurden als Treibmittel 330 g Isopropanol und 100 g Formamid zugesetzt. Des weiteren wurden der Mischung 4 g tert.-Butylperpivalat, 3,2 g tert.-Butylper-2-ethyl-hexanoat, 10 g tert.-Butylperbenzoat, 10,3 g Cumylperneodecanoat, 22 g Magnesiumoxid, 15 g Trennmittel (PAT 1037) und 0,07 g Hydrochinon hinzugefügt.

Diese Mischung wurde 68 h bei 40°C und in einer aus zwei Glasplatten der Größe 50x50 cm und einer 18,5 mm dicken Randabdichtung gebildeten Kammer polymerisiert. Anschließend wurde das Polymerisat zur Endpolymerisation 32 h einem von 32°C bis 115°C reichenden Temperprogramm unterworfen.

Die darauffolgende Schäumung im Heißluftverfahren erfolgte 2h25min bei 205°C, wobei eine starke Verwerfung der Platte während der Schäumung beobachtet werden konnte. Die Platte krümmte sich im unvollständig geschäumten Zustand an einer Stelle so stark zusammen, daß sich die beiden gegenüberliegenden Seiten, die senkrecht zur der Seite der Aufhängung sind, an einer Stelle berührten. Der so erhaltene Schaumstoff wies ein Raumgewicht von 235 kg/m³ auf. Die Stauchung nach DIN 53425 (ASTM D621) betrug bei 180°C und einer Belastung von 0,35 MPa nach 2 h mehr als 18%.

### Beispiel 1:

Es wurde verfahren wie in Vergleichsbeispiel 1 beschrieben. Das angewendete Heißluftverfahren war jedoch zweistufig: Es wurde 2 h bei 140°C vorgewärmt und anschließend 2h75min bei 205°C geschäumt. Es wurde eine nur vernachlässigbare Verwerfung der schäumenden Platte beobachtet. Der so erhaltene Schaumstoff wies ein Raumgewicht von 238 kg/m³ auf. Die Stauchung nach DIN 53425 (ASTM D621) betrug bei 180°C und einer Belastung von 0,35 MPa nach 2 h 12,7%.

### Beispiel 2:

Es wurde verfahren wie in Vergleichsbeispiel 1 beschrieben. Das angewendete Heißluftverfahren war jedoch zweistufig: Es wurde 2 h bei 150°C vorgewärmt und anschließend 2h25min bei 210°C geschäumt. Es wurde eine nur vernachlässigbare Verwerfung beobachtet, die noch schwächer war, als in Beispiel 1.

Der so erhaltene Schaumstoff wies ein Raumgewicht von 203 kg/m³ auf. Die Stauchung nach DIN 53425 (ASTM D621) betrug bei 180°C und einer Belastung von 0,35 MPa nach 2 h 4,6%.

### Beispiel 3:

Es wurde verfahren wie in Vergleichsbeispiel 1 beschrieben. Das angewendete Heißluftverfahren war jedoch zweistufig: Es wurde 2 h bei 160°C vorgewärmt und anschließend 2h25min bei 215°C geschäumt. Es wurde eine nur vernachlässigbare Verwerfung beobachtet, die noch schwächer war, als in Beispiel 2. Der so erhaltene Schaumstoff wies ein Raumgewicht von 208 kg/m³ auf. Die Stauchung nach DIN 53425 (ASTM D621) betrug bei 180°C und einer Belastung von 0,35 MPa nach 2 h 2,9%.

### Beispiel 4:

Es wurde verfahren wie in Vergleichsbeispiel 1 beschrieben. Das angewendete Heißluftverfahren war jedoch zweistufig: Es wurde 2 h bei 160°C vorgewärmt und anschließend 2h25min bei 220°C geschäumt. Es wurde eine nur vernachlässigbare Verwerfung beobachtet, die ähnlich war, wie in Beispiel 3. Der so erhaltene Schaumstoff wies ein Raumgewicht von 168 kg/m³ auf. Die Stauchung nach DIN 53425 (ASTM D621) betrug bei 180°C und einer Belastung von 0,35 MPa nach 2 h 1,3%.

### Beispiel 5:

Es wurde verfahren wie in Vergleichsbeispiel 1 beschrieben. Das angewendete Heißluftverfahren war jedoch zweistufig: Es wurde 2 h bei 170°C vorgewärmt und anschließend 2h25min bei 215°C geschäumt. Es wurde keine Verwerfung beobachtet. Der so erhaltene Schaumstoff wies ein Raumgewicht von 199 kg/m³ auf. Die Stauchung nach DIN 53425 (ASTM D621) betrug bei 180°C und einer Belastung von 0,35 MPa nach 2 h 3,5%.

### Beispiel 6:

Es wurde verfahren wie in Vergleichsbeispiel 1 beschrieben. Das angewendete Heißluftverfahren war jedoch zweistufig: Es wurde 1 h25min bei 180°C vorgewärmt und anschließend 2h25min bei 210°C geschäumt. Es wurde keine Verwerfung beobachtet. Der so erhaltene Schaumstoff wies ein Raumgewicht von 218 kg/m³ auf. Die Stauchung nach DIN 53425 (ASTM D621) betrug bei 180°C und einer Belastung von 0,35 MPa nach 2 h 1,6%.

Das Vergleichsbeispiel 1 und die Beispiele 1 bis 6 zeigen deutlich, daß durch das Vorwärmen das Kriechverhalten verbessert wird. Trotz niedrigerer Dichten beobachtet man unter gleichen Messbedingungen eine geringere Stauchung. Dagegen ist dem Fachmann bekannt, daß bei einer Erniedrigung der Dichte eines Hartschaums seine mechanischen Eigenschaften schlechter, d.h. sein Kriechmodul unter gleichen Messbedingungen kleiner und damit die Stauchung größer wird.

### Vergleichsbeispiel 2:

Zu einem Gemisch aus 610 kg Methacrylsäure, 390 kg Methacrylnitril wurden als Treibmittel 42 kg Isopropanol und 47 kg Formamid zugesetzt. Des weiteren wurden der Mischung 0,4 kg tert.-Butylperpivalat, 0,4 kg tert.-Butylper-2-ethyl-hexanoat, 0,7 kg tert.-Butylperbenzoat, 1,03 kg Cumylperneodecanoat, 2,2 kg Zinkoxid, 1,5 kg Trennmittel (PAT 1037) und 0,075 kg Hydrochinon hinzugefügt.

Diese Mischung wurde 116 h bei 33°C in Kammern polymerisiert, die aus zwei Glasplatten der Größe 100*200cm und einer 30 mm dicken Randabdichtung gebildet waren. Anschließend wurde das Polymerisat zur Endpolymerisation 40 h einem von 35°C bis 130°C reichenden Temperprogramm unterworfen.

Die darauffolgende Schäumung im Heißluftverfahren erfolgte 2h30min bei 200°C, wobei eine starke Verwerfung der Platten während der Schäumung beobachtet werden konnte. Der so erhaltene Schaumstoff wies ein Raumgewicht von 31 kg/m³ auf. Allerdings mußten 40% des so hergestellten Schaumstoffs aufgrund von Rißbildung als Ausschußware verworfen werden.

### Beispiel 7:

Es wurde verfahren wie in Vergleichsbeispiel 2 beschrieben. Das angewendete Heißluftverfahren war jedoch zweistufig: Es wurde 1,5 h bei 160°C vorgewärmt und anschließend 2min30min bei 205°C geschäumt. Es wurde keine Verwerfung der Platten während des Schäumens beobachtet. Der so erhaltene Schaumstoff wies ein Raumgewicht von 32 kg/m³ auf. Die Rißbildung und der damit verbundene Materialverlust durch Ausschußware konnte auf 5% reduziert werden.

## Patentansprüche

1. Verfahren zur Herstellung von blockförmigen oder plattenförmigen Polymethacrylimidschaumstoffen umfassend die Schritte,
a) Copolymerisation von Methacrylsäure und Methacrylnitril sowie ggf. weiterer copolymerisierbarer Monomeren und Additive in Gegenwart von radikalbildenden Initiatoren, Nachpolymerisation und Zyklisierung des Copolymerisats zum Polyimid
b) Umwandlung in einen Schaumstoff,
**dadurch gekennzeichnet,**
**dass** die Umwandlung in einen Schaumstoff in Schritt b) zwei Heißluftprozesse umfasst,
wobei in einem ersten Heißluftprozess das zu schäumende Material vorgewärmt wird und in einen zweiten Heißluftprozess die Schäumung des Materials
stattfindet,
und wobei das Vorwärmen in einem Heißluftofen und das darauf folgende Schäumen in einem zweiten Heißluftofen oder Heißluftofenabschnitt durchgeführt wird,
und wobei der für das Vorwärmen verwendete Heißluftofen entweder eine geringere, aber zeitlich konstante Temperatur oder eine geringere, über die Zeit hinweg jedoch ansteigende Temperatur, aufweist als der für die Schäumung verwendete Heißluftofen oder Heißluftofenabschnitt.

2. Verfahren nach Anspruch 1,
**dadurch gekennzeichnet, dass**
der für das Vorwärmen verwendete Heißluftofen eine geringere, über die Zeit hinweg jedoch ansteigende Temperatur aufweist als der für die Schäumung verwendete Heißluftofen oder Heißluftofenabschnitt und dass die Temperatur in dem für das Vorwärmen verwendeten Heißluftofen am Ende des Heizzyklus wieder gleich der Temperatur in dem für die Schäumung verwendeten Heißluftofen oder Heißluftofenabschnitt ist.

3. Verfahren nach Anspruch 1 oder 2,
**dadurch gekennzeichnet,**
**dass** die für die Temperaturrampe verwendete Heizrate zwischen 0,001 K/min. und 10 K/min. liegt.

4. Verfahren nach Anspruch 1 oder 2,
**dadurch gekennzeichnet,**
**dass** die für die Temperaturrampe verwendete Heizrate zwischen 0,01 K/min. und 5 K/min. liegt.

5. Verfahren nach Anspruch 1 oder 2,
**dadurch gekennzeichnet,**
**dass** die für die Temperaturrampe verwendete Heizrate zwischen 0,1 K/min. und 1 K/min. liegt.

6. Verfahren nach einem der Ansprüche 1 bis 5,
**dadurch gekennzeichnet, dass**
für die mittlere lineare Temperaturerhöhung verschiedene, miteinander kombinierte Heizraten verwendet werden.

7. Verfahren nach Anspruch 1,
**dadurch gekennzeichnet,**
**dass** die Endtemperatur der Temperaturrampe höher ist als die zur Schäumung notwendige Temperatur, die im für die Schäumung verwendeten Heißluftofen vorliegt.

## Claims

1. Method for the preparation of slab-like or sheet-like polymethacrylimide foams, comprising the steps of
a) copolymerization of methacrylic acid and methacrylonitrile and, if required, further copolymerizable monomers and additives in the presence of free radical initiators, postpolymerization and cyclization of the copolymer to give the polyimide
b) conversion into a foam,
**characterized in that** the conversion into a foam in step b) comprises two hot air processes, the material to be foamed being preheated in a first air process and foaming of the material taking place in a second hot air process, and the preheating being carried out in a hot-air oven and the subsequent foaming in a second hot-air oven or hot-air oven section,
and the hot-air oven used for the preheating either having a temperature which is constant as a function of time but lower, or a temperature which increases as a function of time but is lower than that of the hot-air oven or hot-air oven section used for the foaming.

2. Method according to Claim 1, **characterized in that** the hot-air oven used for the preheating has a temperature which increases as a function of time but is lower than that of the hot-air oven or hot-air oven section used for the foaming, and **in that** the temperature in the hot-air oven used for the preheating is the same again, at the end of the heating cycle, as the temperature in the hot-air oven or hot-air oven section used for the foaming.

3. Method according to Claim 1 or 2, **characterized in that** the heating rate used for the temperature ramp is from 0.001 K/min to 10 K/min.

4. Method according to Claim 1 or 2, **characterized in that** the heating rate used for the temperature ramp is from 0.01 K/min to 5 K/min.

5. Method according to Claim 1 or 2, **characterized in that** the heating rate used for the temperature ramp is from 0.1 K/min to 1 K/min.

6. Method according to one of Claims 1 to 5, **characterized in that** different heating rates combined with one another are used for the mean linear temperature increase.

7. Method according to Claim 7, **characterized in that** the final temperature of the temperature ramp is higher than the temperature required for the foaming and present in the hot-air oven used for the foaming.

## Revendications

1. Procédé pour la production de mousses de polyméthacrylimide en forme de blocs ou de plaques, comprenant les étapes,
a) copolymérisation d'acide méthacrylique et de méthacrylonitrile ainsi qu'éventuellement d'autres monomères copolymérisables et avec des additifs, en présence d'amorceurs générateurs de radicaux, post-polymérisation et cyclisation du copolymérisat en le polyimide
b) transformation en une mousse,
**caractérisé en ce que**
la transformation en une mousse dans l'étape b) comprend deux processus à air chaud,
dans un premier processus à air chaud on préchauffe le matériau à transformer en mousse et dans un second processus à air chaud le moussage du matériau a lieu,
et en effectuant le préchauffage dans une étuve à air chaud et le moussage y faisant suite dans une seconde étuve à air chaud ou un second segment de l'étuve à air chaud,
et l'étuve à air chaud utilisée pour le préchauffage présentant soit une température plus basse, mais constante dans le temps, soit une température plus basse, mais augmentant au cours du temps, que l'étuve à air chaud ou le segment d'étuve à air chaud utilisé(e) pour le moussage.

2. Procédé selon la revendication 1,
**caractérisé en ce que**
l'étuve à air chaud utilisée pour le préchauffage présente une température plus basse, mais augmentant au cours du temps, que l'étuve à air chaud ou le segment d'étuve à air chaud utilisé(e) pour le moussage et **en ce que** la température dans l'étuve à air chaud utilisée pour le préchauffage est à la fin du cycle de chauffe de nouveau égale à la température dans l'étuve à air chaud ou le segment d'étuve à air chaud utilisé(e) pour le moussage.

3. Procédé selon la revendication 1 ou 2,
**caractérisé en ce que**
la vitesse de chauffe utilisée pour l'élévation de la température est comprise entre 0,001 K/min et 10 K/min.

4. Procédé selon la revendication 1 ou 2,
**caractérisé en ce que**
la vitesse de chauffe utilisée pour l'élévation de la température est comprise entre 0,01 K/min et 5 K/min.

5. Procédé selon la revendication 1 ou 2,
**caractérisé en ce que**
la vitesse de chauffe utilisée pour l'élévation de la température est comprise entre 0,1 K/min et 1 K/min.

6. Procédé selon l'une quelconque des revendications 1 à 5,
**caractérisé en ce que**
pour l'élévation linéaire moyenne de la température on utilise diverses vitesses de chauffe combinées entre elles.

7. Procédé selon la revendication 1,
**caractérisé en ce que**
la température finale de l'élévation de la température est plus élevée que la température requise pour le moussage, qui est présente dans l'étuve à air chaud utilisée pour le moussage.
